Europäisches Patentamt

European Patent Office

Office européen des brevets

(19)

(11) **EP 0 758 497 B1**

(12) **EUROPÄISCHE PATENTSCHRIFT**

(45) Veröffentlichungstag und Bekanntmachung des Hinweises auf die Patenterteilung:
**17.12.1997 Patentblatt 1997/51**

(21) Anmeldenummer: **95916578.8**

(22) Anmeldetag: **24.04.1995**

(51) Int Cl.⁶: **H02H 7/045**

(86) Internationale Anmeldenummer:
**PCT/DE95/00581**

(87) Internationale Veröffentlichungsnummer:
**WO 95/30264 (09.11.1995 Gazette 1995/48)**

(54) **STROMDIFFERENTIALSCHUTZANORDNUNG FÜR EINEN TRANSFORMATOR**

DIFFERENTIAL CURRENT PROTECTION FOR A TRANSFORMER

SYSTEME DE PROTECTION DIFFERENTIELLE DESTINE A UN TRANSFORMATEUR

(84) Benannte Vertragsstaaten:
**FR GB IT**

(30) Priorität: **03.05.1994 DE 4416048**

(43) Veröffentlichungstag der Anmeldung:
**19.02.1997 Patentblatt 1997/08**

(73) Patentinhaber: **SIEMENS AKTIENGESELLSCHAFT 80333 München (DE)**

(72) Erfinder: **SCHIEL, Ludwig,Dr. D-10627 Berlin (DE)**

(56) Entgegenhaltungen:
**DE-A- 2 322 981**    **US-A- 5 172 329**

- **ETZ, MAY 1994, GERMANY, Bd. 115, Nr. 9, ISSN 0170-1711, Seiten 496-498, 500 - 502, SCHIEL L ET AL 'Umfassendes Konzept für den Transformatorschutz'**
- **PATENT ABSTRACTS OF JAPAN vol. 016 no. 192 (E-1199), 11.Mai 1992 & JP-A-04 026318 (MITSUBISHI ELECTRIC CORP) 29.Januar 1992,**
- **"A stand-alone digital protective relay for power transformers"; IEEE Transactions on Power Delivery, Jan. 1991 USA; Bd.6, Nr.1, Seiten 85-95**

**Beschreibung**

Leistungstransformatoren, wie sie in mehrphasigen Energieversorgungsnetzen eingesetzt werden, sind hinsichtlich ihrer Wicklungen auf der Ober- und auf der Unterspannungsseite sehr unterschiedlich im Hinblick auf den jeweiligen Einsatzfall geschaltet. Die unterschiedlichen Schaltungen der Wicklungen werden als "Schaltgruppen" bezeichnet, so daß jedem Transformator eine bestimmte Schaltgruppe eigen ist. Die Schaltgruppe eines Transformators wird zum Beispiel mit "Yd5" angegeben, wobei "Y" angibt, daß die Wicklungen des Transformators auf der Oberspannungsseite im Stern geschaltet sind; "d" steht dafür, daß auf der Unterspannungsseite die Wicklungen im Dreieck geschaltet sind. Die Ziffer "5" gibt an, daß der Winkel zwischen den Leiterströmen einer Phase 5 x 30°, also 150° beträgt.

Soll ein Transformator in einem mehrphasigen Energieversorgungsnetz auf das Auftreten eines inneren Fehlers mittels einer Stromdifferentialschutzanordnung überwacht werden, dann ist es erforderlich, zum Vergleich der auf der Ober- und auf der Unterspannungsseite fließenden Ströme in der Schutzanordnung Strommeßgrößen zu verwenden, die unabhängig von der jeweiligen Schaltung der Wicklungen des Transformators sind, da andernfalls für Transformatoren unterschiedlicher Schaltgruppen jeweils unterschiedlich ausgelegte Stromdifferentialschutzanordnungen eingesetzt werden müßten. Beim Vergleich der Ströme auf den beiden Seiten des zu überwachenden Transformators sind auch die Phasenlagen der Ströme zu berücksichtigen. Diese Anpassung der Stromdifferentialschutzanordnung an die Schaltgruppe des jeweils zu überwachenden Transformators wird als Schaltgruppenanpassung bezeichnet.

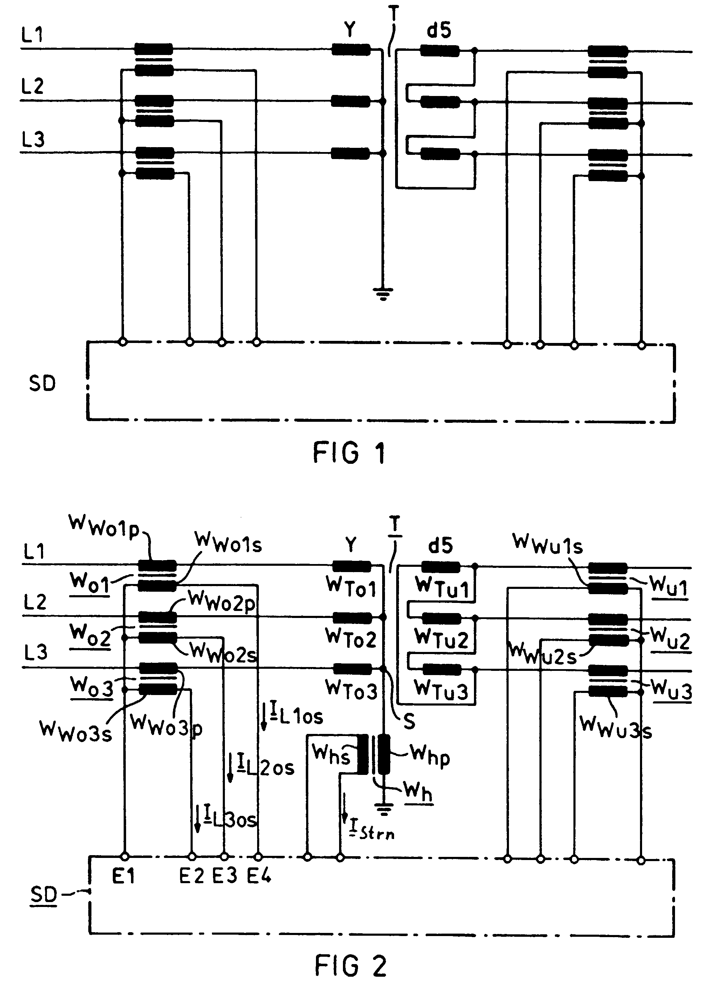

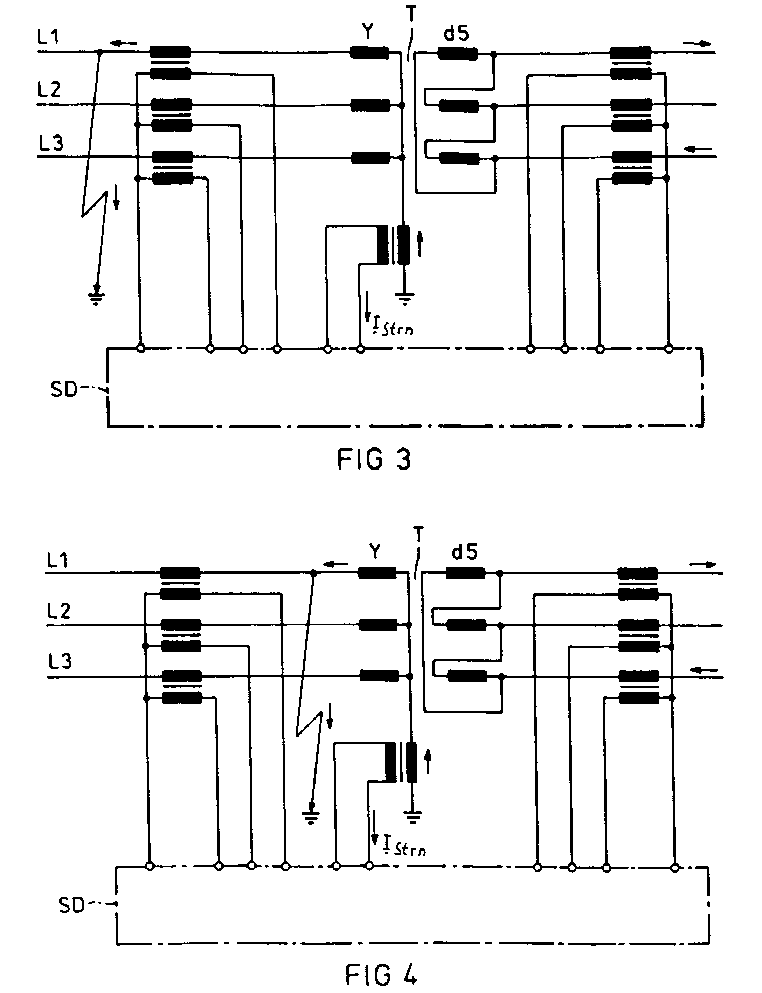

Bei der Schaltgruppenanpassung einer Stromdifferentialschutzanordnung an einen mehrphasigen Transformator mit einer bestimmten Schaltgruppe sind alle auftretenden Fehlerfälle zu berücksichtigen, und zwar in der Weise, daß mit Sicherheit bei einem äußeren Fehler in bezug auf den zu überwachenden Transformator ein Ansprechen der Stromdifferentialschutzanordnung nicht erfolgt, hingegen bei einem im zu überwachenden Transformator auftretenden Fehler mit Sicherheit dieser Fehler von der Stromdifferentialschutzanordnung angezeigt wird. Eine besondere Schwierigkeit ergibt sich in dieser Hinsicht dann, wenn mittels einer Stromdifferentialschutzanordnung ein Transformator zu überwachen ist, bei dem mindestens eine Wicklungsanordnung im Stern mit einer Verbindung des Sternpunktes nach Erde geschaltet ist. In bezug auf einen solchen Transformator ist bei einer vorbekannten Stromdifferentialschutzanordnung PQ 721 der Firma AEG zur Schaltgruppenanpassung eine Berechnung der symmetrischen Komponenten des Nullsystem-Stromes vorgesehen. Bei diesem Gerät wird für einen zu überwachenden Transformator T der Schaltgruppe Yd5 (vgl. Fig. 1) für die Oberspannungsseite folgende Anpassungsmatrix verwendet:

$$\begin{pmatrix} \underline{I}^{*}_{L1os} \\ \underline{I}^{*}_{L2os} \\ \underline{I}^{*}_{L3os} \end{pmatrix} = \begin{pmatrix} 1 & 0 & 0 \\ 0 & 1 & 0 \\ 0 & 0 & 1 \end{pmatrix} \begin{pmatrix} \underline{I}_{L1os} \\ \underline{I}_{L2os} \\ \underline{I}_{L3os} \end{pmatrix} - \begin{pmatrix} \underline{I}_{0os} \\ \underline{I}_{0os} \\ \underline{I}_{0os} \end{pmatrix} \qquad (1)$$

In obiger Beziehung (1) bedeutet

$\underline{I}_{L1os}=$ erfaßbarer Strom in der Phase bzw. im Leiter L1 auf der Oberspannungsseite des zu überwachenden Transformators

$\underline{I}_{L2os}=$ erfaßbarer Strom in der Phase bzw. im Leiter L2 auf der Oberspannungsseite des zu überwachenden Transformators

$\underline{I}_{L3os}=$ erfaßbarer Strom in der Phase bzw. im Leiter L3 auf der Oberspannungsseite des zu überwachenden Transformators

$\underline{I}_{0os}=$ Nullsystem-Strom auf der Oberspannungsseite des zu überwachenden Transformators

$\underline{I}^{*}_{L1os}=$ "angepaßter" Strom in bezug auf Phase bzw. Leiter L1

$\underline{I}^{*}_{L2os}=$ "angepaßter" Strom in bezug auf Phase bzw. Leiter L2

$\underline{I}^{*}_{L3os}=$ "angepaßter" Strom in bezug auf Phase bzw. Leiter L3

Für die Unterspannungsseite wird bei dem bekannten Gerät die nachstehende Anpassungsmatrix berechnet:

$$
\begin{pmatrix} I^{*}_{L1us} \\ I^{*}_{L2us} \\ I^{*}_{L3us} \end{pmatrix} = 1/\sqrt{3} \begin{pmatrix} -1 & 0 & 1 \\ 1 & -1 & 0 \\ 0 & 1 & -1 \end{pmatrix} \begin{pmatrix} I_{L1us} \\ I_{L2us} \\ I_{L3us} \end{pmatrix} \qquad (2)
$$

Die Bedeutung der einzelnen Größen in der Matrix (2) entspricht weitgehend der nach der Beziehung (1) mit dem Unterschied, daß in der Matrix (2) der Buchstabe "u" die Unterspannungsseite kennzeichnet.

Die Größe $I_{0os}$ wird - wie oben bereits angemerkt - in einer Rechenschaltung des bekannten Gerätes nach folgender Gleichung (3) ermittelt:

$$
I_{0os} = 1/3(I_{L1os} + I_{L2os} + I_{L3os}) \qquad (3)
$$

Tritt ein innerer einpoliger Fehler in der Phase L1 des zu überwachenden Transformators T auf, dann gilt grundsätzlich die folgende Fehlerbedingung (4):

$$
\begin{pmatrix} I_{L1os} \\ I_{L2os} \\ I_{L3os} \end{pmatrix} = \begin{pmatrix} 1 \\ 0 \\ 0 \end{pmatrix} \begin{pmatrix} I_{F} \\ I_{F} \\ I_{F} \end{pmatrix}, \qquad (4)
$$

in der $I_{F}$ den Kurzschlußstrom in der Phase L1 bezeichnet.

Wie sich errechnen läßt, ergeben sich bei der vorbekannten Stromdifferentialschutzanordnung Differenzströme $I_{DIFF1}$, $I_{DIFF2}$ und $I_{DIFF3}$ in bezug auf die einzelnen Phasen bzw. Leiter L1 bis L3 , wie sie durch die nachfolgende Matrix (5) beschrieben sind:

$$
\begin{pmatrix} I_{DIFF1} \\ I_{DIFF2} \\ I_{DIFF3} \end{pmatrix} = \begin{pmatrix} 2/3 \\ -1/3 \\ -1/3 \end{pmatrix} \begin{pmatrix} I_{F} \\ I_{F} \\ I_{F} \end{pmatrix} \qquad (5)
$$

Dies bedeutet, daß auch hinsichtlich der Phasen bzw. Leiter L2 und L3 ein Differenzstrom $I_{DIFF2}$ und $I_{DIFF3}$ festgestellt wird, obwohl für den angenommenen Fehlerfall ein Differenzstrom sich für diese Leitungen bzw. Phasen überhaupt nicht ergeben dürfte. Dies führt zu einer Schwächung der Empfindlichkeit bei der Erfassung von inneren Fehlern.

Entsprechendes gilt hinsichtlich einer anderen bekannten Einrichtung zum Erfassen des Differenzstromes in einer Differentialschutzanordnung (deutsche Offenlegungsschrift DT 2 322 981), bei der Ströme in den Phasen eines Schutzobjektes, beispielsweise eines Transformators, ober- und unterspannungsseitig gemessen, in stromproportionale Spannungen umgewandelt und mittels geeignet zusammengeschalteter Operationsverstärker verarbeitet werden. Es werden Differenzströme gebildet, um ein fehlerhaftes Auslösen der Schutzanordnung zu vermeiden. Hierfür wird der Nullstrom aus den gemessenen Phasenströmen gebildet, indem zur Ermittlung des Nullsystemstroms die Spannungen, die den in der betreffenden Wicklung des Schutzobjektes fließenden Strömen entsprechen, durch einen als Addierglied beschalteten Operationsverstärker addiert und durch -3 dividiert werden.

Die Erfindung geht von einer Stromdifferentialschutzanordnung der oben beschriebenen Art aus, also von einer Stromdifferentialschutzanordnung für einen in einem mehrphasigen Energieversorgungsnetz angeordneten Transformator mit mindestens einer im Stern geschalteten Wicklungsanordnung mit einer Verbindung des Sternpunktes nach Erde, die über bezüglich des Transformators ober- und unterspannungsseitig angeordnete Stromwandler mit Strömen in den Phasen des Energieversorgungsnetzes proportionalen Sekundärströmen beaufschlagt ist und in der in einer Rechenschaltung aus den Sekundärströmen unter Berücksichtigung einer dem Nullsystem-Strom entsprechenden Stromgröße phasenbezogen jeweils ein Differenzstrom gebildet und auf seine Größe überwacht wird, und setzt sich die Aufgabe, eine Stromdifferentialschutzanordnung für einen Transformator anzugeben, die sich auch bei einem einpoligen inneren Fehler durch eine hohe Empfindlichkeit auszeichnet.

Zur Lösung dieser Aufgabe enthält die Differentialschutzanordnung erfindungsgemäß einen mit seiner Primärwicklung in der Verbindung zwischen dem Sternpunkt und Erde liegenden Hilfsstromwandler, und die Rechenschaltung verarbeitet den Sekundärstrom des Hilfsstromwandlers als die dem Nullsystem-Strom entsprechende Stromgröße.

Es ist zwar aus der US-Patentschrift 5,172,329 bzw. aus "IEEE Transactions on Power Delivery", Vol. 6, No. 1, Januar 1991, Seiten 85 bis 95, eine Schutzanordnung für einen Leistungstransformator mit mindestens einer im Stern geschalteten Wicklungsanordnung mit einer Verbindung des Sternpunktes mit Erde sowie mit ober- und unterspannungsseitig angeordneten Stromwandlern und mit einem in der Verbindung zwischen dem Sternpunkt und Erde liegenden Hilfsstromwandler bekannt, jedoch wird in einer Rechenschaltung der bekannten Schutzanordnung bei der Ermittlung von Differenzströmen der Sekundärstrom des Hilfsstromwandlers nicht als eine dem Nullsystem entsprechende Stromgröße berücksichtigt.

Ein wesentlicher Vorteil der erfindungsgemäßen Stromdifferentialschutzanordnung besteht darin, daß allein durch einen zusätzlichen Hilfsstromwandler und Erfassung des Stromes zwischen Sternpunkt und Erde eine Anpassungsmatrix verwendet werden kann, die dazu führt, daß sich ein Differenzstrom bei einem einpoligen inneren Fehler nur hinsichtlich der Phase ergibt, die tatsächlich fehlerbehaftet ist. Für die anderen - fehlerfreien - Phasen werden Differenzströme mit dem Wert Null ermittelt.

Bei der erfindungsgemäßen Stromdifferentialschutzanordnung hat es sich als vorteilhaft erwiesen, wenn die Rechenschaltung jeweils 1/3 des Sekundärstromes des Hilfsstromwandlers als die dem Nullsystem-Strom entsprechende Größe berücksichtigt.

Zur weiteren Erläuterung der Erfindung ist in

Figur 2     ein Ausführungsbeispiel der erfindungsgemäßen Stromdifferentialschutzanordnung, in
Figur 3     die Situation bei einem einpoligen äußeren Fehler und in
Figur 4     die Situation bei einem einpoligen inneren Fehler dargestellt.

Wie die Figur 2 im einzelnen erkennen läßt, in der mit der Fig. 1 übereinstimmende Teile mit denselben Bezugszeichen versehen sind, ist der zu überwachende Transformator T wiederum in einem dreiphasigen Energieversorgungsnetz mit Leitern L1, L2 und L3 angeordnet, wobei die Wicklungen $W_{To1}$, $W_{To2}$ und $W_{To3}$ des Transformators T auf der Oberspannungsseite im Stern geschaltet sind, was auch durch den Buchstaben "Y" in der Figur 2 gekennzeichnet ist. Der Sternpunkt S der Wicklungsanordnung mit den Wicklungen $W_{To1}$ bis $W_{To3}$ ist mit Erde verbunden. Auf der Unterspannungsseite sind die Wicklungen $W_{Tu1}$, $W_{Tu2}$ und $W_{Tu3}$ des Transformators T im Dreieck geschaltet ("d" in Figur 2), wobei eine Phasenverschiebung zwischen den Strömen um 5 x 30°, also 150° durch die Ziffer 5 angegeben wird.

Im Zuge der Leiter L1 bis L3 sind auf der Oberspannungsseite des zu überwachenden Transformators T Stromwandler $W_{o1}$ bis $W_{o3}$ mit ihren Primärwicklungen $W_{Wo1p}$ bis $W_{Wo3p}$ angeordnet; Sekundärwicklungen $W_{Wo1s}$ bis $W_{Wo3s}$ sind über Eingänge $E_1$ bis $E_4$ mit einer Stromdifferentialschutzanordnung SD verbunden, so daß über diese Eingänge Sekundärströme $\underline{I}_{L1os}$, $\underline{I}_{L2os}$ und $\underline{I}_{L3os}$ zugeführt werden. In entsprechender Weise sind auf der Unterspannungsseite Stromwandler $W_{u1}$ bis $W_{u3}$ vorgesehen, über deren Sekundärwicklungen $W_{Wu1s}$ bis $W_{Wu3s}$ Sekundärströme $\underline{I}_{L1us}$ bis $\underline{I}_{L3us}$ von der Stromdifferentialschutzanordnung SD abgenommen werden.

Wie Figur 2 ferner erkennen läßt, ist in die Verbindung zwischen dem Sternpunkt S der Wicklungen $W_{TO1}$ bis $W_{TO3}$ des Transformators T ein Hilfsstromwandler $W_h$ mit seiner Primärwicklung $W_{hp}$ angeordnet. Die Sekundärwicklung $W_{hs}$ liefert einen Strom an die Stromdifferentialschutzanordnung SD, der dem Nullsystem-Strom proportional ist. In einer Rechenschaltung der Stromdifferentialschutzanordnung SD wird für die Oberspannungsseite des zu überwachenden Transformators T eine Anpassungsmatrix berechnet, wie sie nachstehend aufgeführt ist:

$$\begin{pmatrix} \underline{I}^{\bullet}_{L1os} \\ \underline{I}^{\bullet}_{L2os} \\ \underline{I}^{\bullet}_{L3os} \end{pmatrix} = \begin{pmatrix} 1 & 0 & 1 \\ 0 & 1 & 0 \\ 0 & 0 & 1 \end{pmatrix} \begin{pmatrix} \underline{I}_{L1os} \\ \underline{I}_{L2os} \\ \underline{I}_{L3os} \end{pmatrix} - \frac{1}{3} \begin{pmatrix} \underline{I}_{Strn} \\ \underline{I}_{Strn} \\ \underline{I}_{Strn} \end{pmatrix} \qquad (6)$$

Die Anpassungsmatrix für die Unterspannungsseite sieht genauso aus, wie sie oben in Gleichung (2) bezüglich des vorbekannten Gerätes angegeben worden ist.

Tritt bei einem mit der erfindungsgemäßen Stromdifferentialschutzanordnung überwachten Transformator T ein einpoliger äußerer Fehler auf, wie er in Figur 3 dargestellt ist, dann ergeben sich für die Ströme Werte, wie sie nachfolgend mit dem Gleichungssystem (7) bezeichnet sind.

$$\underline{I}_{L1\,os} = 1\underline{/0°}\ \underline{I}_{Stm} = 1\underline{/180°} \qquad \underline{I}_{L1us} = 1/\sqrt{3}\ \underline{/0°}$$

$$\underline{I}_{L2os} = 0 \qquad \underline{I}_{L2us} = 0$$

$$\underline{I}_{L3os} = 0 \qquad \underline{I}_{L3us} = 1/\sqrt{3}\ \underline{/180°} \tag{7}$$

Die Weiterverarbeitung dieser Ströme in der Stromdifferentialschutzanordnung SD erfolgt zur Nullstrom-Korrektur mittels der schon angegebenen Beziehung (6) hinsichtlich der Oberspannungsseite und zur Schaltgruppenkorrektur bezüglich der Unterspannungsseite nach der Beziehung (2). Damit ergeben sich dann folgende Werte für die korrigierten bzw. angepaßten Ströme:

$$\underline{I}^{*}_{L1os} = 2/3\ \underline{/0°} \qquad\qquad \underline{I}^{*}_{L1us} = 2/3\ \underline{/180°}$$
$$\underline{I}^{*}_{L2os} = 1/3\ \underline{/180°} \qquad\qquad \underline{I}^{*}_{L2us} = 1/3\ \underline{/0°} \qquad (8)$$
$$\underline{I}^{*}_{L3os} = 1/3\ \underline{/180°} \qquad\qquad \underline{I}^{*}_{L3us} = 1/3\ \underline{/0°}$$

Daraus folgt ohne weiteres für die einzelnen Differenzströme:

$$\underline{I}_{DIFF\,L1} = \underline{I}^{*}_{L1os} + \underline{I}^{*}_{L1us} = 0$$
$$\underline{I}_{DIFF\,L2} = \underline{I}^{*}_{L2os} + \underline{I}^{*}_{L2us} = 0 \tag{9}$$
$$\underline{I}_{DIFF\,L3} = \underline{I}^{*}_{L3os} + \underline{I}^{*}_{L3us} = 0$$

Tritt dagegen ein einpoliger innerer Fehler auf, wie er in Figur 4 dargestellt ist, dann ergeben sich hinsichtlich der erfaßten Ströme folgende Verhältnisse

$$\underline{I}_{L1os} = 0 \qquad \underline{I}_{Stm} = 1\underline{/180°} \qquad\qquad \underline{I}_{L1\,us} = 1/\sqrt{3}\ \underline{/0°}$$
$$\underline{I}_{L2os} = 0 \qquad\qquad\qquad\qquad \underline{I}_{L2\,us} = 0 \qquad (10)$$
$$\underline{I}_{L3os} = 0 \qquad\qquad\qquad\qquad \underline{I}_{L3\,us} = 1/\sqrt{3}\ \underline{/180°}$$

Hinsichtlich der korrigierten, "angepaßten" Ströme ergibt sich dann

$$\underline{I}^{*}_{L1os} = 1/3\ \underline{/180°} \qquad\qquad \underline{I}^{*}_{L1us} = 2/3\ \underline{/180°}$$
$$\underline{I}^{*}_{L2os} = 1/3\ \underline{/180°} \qquad\qquad \underline{I}^{*}_{L2us} = 1/3\ \underline{/0°} \qquad (11)$$
$$\underline{I}^{*}_{L3os} = 1/3\ \underline{/180°} \qquad\qquad \underline{I}^{*}_{L3us} = 1/3\ \underline{/0°}$$

Hinsichtlich der Differenzströme $I_{DIFFL1}$ bis $I_{DIFFL3}$ ergeben sich dann folgende Werte

$$\underline{I}_{DIFF\,L1} = I^*_{L1os} + I^*_{L1us} = \underline{1/180°}$$
$$\underline{I}_{DIFF\,L2} = I^*_{L2os} + I^*_{L2us} = 0 \qquad\qquad (12)$$
$$\underline{I}_{DIFF\,L3} = I^*_{L3os} + I^*_{L3us} = 0$$

Dies zeigt, daß bei einer Stromdifferentialschutzanordnung der erfindungsgemäßen Ausführung die Empfindlichkeit der Schutzanordnung auch bei einpoligen inneren Fehlern nicht eingeschränkt ist.

Abschließend sei noch ausdrücklich angemerkt, daß die Anwendung der Erfindung nicht auf einen Transformator mit der in den Figuren dargestellten Schaltgruppe beschränkt ist, sondern auch bei der Überwachung aller solcher Transformatoren mit Vorteil anwendbar ist, bei denen mindestens eine Wicklungsanordnung auf der Ober- oder Unterspannungsseite im Stern geschaltete Wicklungen mit geerdetem Sternpunkt aufweist. Dies gilt beispielsweise auch für zu überwachende Transformatoren, die auf der Unterspannungsseite im Stern geschaltete Wicklungen mit geerdetem Sternpunkt aufweisen und beispielsweise auch für solche Transformatoren, bei denen auf der Ober- und auf der Unterspannungsseite mit geerdeten Sternpunkt geschaltete Wicklungen vorhanden sind. Die jeweilige Korrektur des Nullsystem-Stromes in der erfinderischen Weise ist dann stets dort vorzunehmen, wo Wicklungsanordnungen im Stern geschaltete Wicklungen mit geerdetem Sternpunkt aufweisen.

**Patentansprüche**

1. Stromdifferentialschutzanordnung für einen in einem mehrphasigen Energieversorgungsnetz angeordneten Transformator (T) mit mindestens einer im Stern geschalteten Wicklungsanordnung ($W_{To1}$, $W_{To2}$, $W_{To3}$) mit einer Verbindung des Sternpunktes (S) mit Erde,

   - die über bezüglich des Transformators (T) ober- und unterspannungsseitig angeordnete Stromwandler ($W_{os1}$ bis $W_{os3}$; $W_{us1}$ bis $W_{us3}$) mit Strömen in den Phasen (L1, L2, L3) des Energieversorgungsnetzes proportionalen Sekundärströmen (($\underline{I}_{L1os}$ *bis* $\underline{I}_{L3os}$; $\underline{I}_{L1us}$ *bis* $\underline{I}_{L3us}$) beaufschlagt ist und
   - in der in einer Rechenschaltung aus den Sekundärströmen (($\underline{I}_{L1os}$ *bis* $\underline{I}_{L3os}$; $\underline{I}_{L1us}$ *bis* $\underline{I}_{L3us}$) unter Berücksichtigung einer dem Nullsystem-Strom entsprechenden Stromgröße ($\underline{I}_{Strn}$) phasenbezogen jeweils ein Differenzstrom ($\underline{I}_{DIFF1}$ *bis* $\underline{I}_{DIFF3}$) gebildet und auf seine Größe überwacht wird,

   **dadurch gekennzeichnet**, daß

   - die Stromdifferentialschutzanordnung (SD) einen mit seiner Primärwicklung ($W_{hp}$) in der Verbindung zwischen dem Sternpunkt (S) und Erde liegenden Hilfsstromwandler ($W_h$ ) enthält und
   - die Rechenschaltung den Sekundärstrom ($\underline{I}_{Strn}$) des Hilfsstromwandlers ($W_h$) als die dem Nullsystem-Strom entsprechende Stromgröße verarbeitet.

2. Stromdifferentialschutzanordnung nach Anspruch 1,
   **dadurch gekennzeichnet**, daß

   - die Rechenschaltung jeweils 1/3 des Sekundärstromes ($\underline{I}_{Strn}$) des Hilfsstromwandlers ($W_h$) als die dem Nullsystem-Strom entsprechende Größe berücksichtigt.

**Claims**

1. Current differential protection arrangement for a transformer (T), which is arranged in a multiphase power supply system, having at least one starconnected winding arrangement ($W_{To1}$, $W_{To2}$, $W_{To3}$) with a connection of the star point (S) to earth,

   - to which arrangement secondary currents ($\underline{I}_{L1os}$ *to* $\underline{I}_{L3os}$; $\underline{I}_{L1us}$ *to* $\underline{I}_{L3us}$), which are proportional to currents in the phases (L1, L2, L3) of the power supply system, are applied by way of current transformers ($W_{os1}$ to $W_{os3}$; $W_{us1}$ to $W_{us3}$) arranged on the high-voltage side and on the low-voltage side relative to the transformer (T), and
   - in which arrangement in a computing circuit arrangement a respective differential current ($\underline{I}_{DIFF1}$ *to* $\underline{I}_{DIFF3}$) is formed in a phase-related manner from the secondary currents ($\underline{I}_{L1os}$ *to* $\underline{I}_{L3os}$; $\underline{I}_{L1us}$ *to* $\underline{I}_{L3us}$) in consideration of a current variable ($I_{Strn}$) corresponding to the zero phase-sequence system current and is monitored with regard to its magnitude,

characterised in that

- the current differential protection arrangement (SD) contains an auxiliary current transformer ($W_h$), the primary winding ($W_{hp}$) of which lies in the connection between the star point (S) and earth, and
- the computing circuit arrangement processes the secondary current ($I_{Strn}$) of the auxiliary current transformer ($W_h$) as the current variable that corresponds to the zero phase-sequence system current.

2. Current differential protection arrangement according to claim 1, characterised in that

- the computing circuit arrangement in each case considers 1/3 of the secondary current ($I_{Strn}$) of the auxiliary current transformer ($W_h$) as the variable that corresponds to the zero phase-sequence system current.

## Revendications

1. Dispositif de protection différentielle pour un transformateur (T) agencé dans un réseau polyphasé d'alimentation en énergie avec au moins un système d'enroulements ($W_{To1}$, $W_{To2}$, $W_{To3}$) branché en étoile et comportant une liaison du point neutre (S) à la terre,

- qui reçoit, par l'intermédiaire de transformateurs de courants ($W_{os1}$ à $W_{os3}$ ; $W_{us1}$ à $W_{us3}$) agencés du côté haute tension et du côté basse tension par rapport au transformateur (T), des courants secondaires ($I_{L1os}$ à $I_{L3os}$ ; $I_{L1us}$ à $I_{L3us}$) proportionnels à des courants dans les phases (L1, L2, L3) du réseau d'alimentation en énergie et
- dans lequel un courant différentiel ($I_{DIFF1}$ à $I_{DIFF3}$) est formé à chaque fois, rapporté à la phase, dans un circuit de calcul, à partir des courants secondaires ($I_{L1os}$ à $I_{L3os}$ ; $I_{L1us}$ à $I_{L3us}$) en tenant compte d'une grandeur de courant ($I_{Strn}$) correspondant au courant de système homopolaire et est contrôlé quant à sa grandeur,

 caractérisé par le fait que

- le dispositif de protection différentielle (SD) contient un transformateur de courant auxiliaire ($W_h$) qui se trouve avec son enroulement primaire ($W_{hp}$) dans la liaison entre le point neutre (S) et la terre et
- le circuit de calcul traite le courant secondaire ($I_{Strn}$) du transformateur de courant auxiliaire ($W_h$) comme la grandeur de courant correspondant au courant de système homopolaire.

2. Dispositif de protection différentielle selon la revendication 1,
 caractérisé par le fait que

- le circuit de calcul prend en compte à chaque fois 1/3 du courant secondaire ($I_{Strn}$) du transformateur de courant auxiliaire ($W_h$) comme grandeur correspondant au courant de système homopolaire.

FIG 1

FIG 2

FIG 3

FIG 4